# EUROPÄISCHE PATENTSCHRIFT

(11) **EP 1 348 104 B1**
(45) Veröffentlichungstag und Bekanntmachung des Hinweises auf die Patenterteilung: **23.09.2009**
(21) Anmeldenummer: 01995703.4
(22) Anmeldetag: 20.12.2001
(51) Int. Cl.: G01B 7/012, G01B 3/00, G01D 11/14, F16F 15/03, F16F 7/08

(54) **TASTKOPF FÜR EIN KOORDINATENMESSGERÄT**
PROBE FOR A DEVICE FOR MEASURING CO-ORDINATES
PALPEUR POUR APPAREIL DE MESURE DE COORDONNEES

(30) Priorität: 05.01.2001 DE 10100350
(43) Veröffentlichungstag der Anmeldung: 01.10.2003
(73) Patentinhaber: Carl Zeiss Industrielle Messtechnik GmbH, 73447 Oberkochen (DE)
(72) Erfinder: SZENGER, Franz, 89551 Königsbronn (DE); JENISCH, Walter, 89520 Heidenheim (DE); FURTWÄNGLER, Hans-Jörg, 73430 Aalen (DE); BRENNER, Kurt, 74589 Satteldorf (DE); MAIER, Thomas, 73457 Essingen (DE); STACKLIES, Horst, 73431 Aalen (DE)
(74) Vertreter: Henckell, Carsten
(86) Internationale Anmeldenummer: PCT/EP2001/015120
(87) Internationale Veröffentlichungsnummer: WO 2002/054010

(56) Entgegenhaltungen:
- EP-A- 0 531 917
- DE-A- 3 106 031
- US-A- 5 623 766

## Beschreibung

Die Erfindung betrifft einen Tastkopf für ein Koordinatenmeßgerät mit Meßsystemen zur Messung der Auslenkung des nachgiebigen Teils des Tastkopfes an dem der Taststift befestigt ist und mit einer Dämpfungseinrichtung zur Dämpfung der Bewegung des nachgiebigen Teils des Tastkopfes.

Ein derartiger Tastkopf ist bereits aus der deutschen Offenlegungsschrift DE 44 24 225 A1 bekannt. Hierin ist ein messender Tastkopf beschrieben, dessen Taststift in den drei Koordinatenrichtungen (x, y, z) ausgelenkt werden kann. Dazu weist der Tastkopf drei hintereinander angeordnete Federparallelogramme auf, wobei der Taststift über jedes Federparallelogramm in einer Koordinatenrichtung verschiebbar gelagert ist. Zur Erfassung der Auslenkung ist jedem Federparallelogramm ein Meßsystem in Form eines Tauchspulenmagnetes zugeordnet. Zusätzlich ist jedem Federparallelogramm ein Meßkraftgenerator zugeordnet, der in Form eines Tauchspulenantriebes vorgesehen ist und über den in der betreffenden Koordinatenrichtung Kräfte auf den Taststift aufgeschaltet werden können. Die Ansteuerung der Meßkraftgeneratoren kann hierbei über eine geeignete Regelschaltung so erfolgen, daß der Taststift in beliebigen Richtungen mit einer Meßkraft beaufschlagt werden kann und/oder in beliebigen Richtungen geklemmt werden kann und/oder in beliebigen Richtungen gedämpft werden kann.

Obwohl es sich um eine gut funktionierende Lösung handelt, hat sich herausgestellt, daß bei der Verwendung des hierin beschriebenen Tastkopfes bedingt durch die Tauchspulen relativ große Wärmeentwicklung auftritt, was sich wiederum nachteilig auf die meßgenauigkeit auswirkt.

Ausgehend hiervon liegt unserer Erfindung die Aufgabe zugrunde einen Tastkopf der eingangs genannten Art zu schaffen, mit dem insbesondere die Dämpfung des nachgiebigen Teils des Tastkopfes und somit des Taststiftes bei geringer Wärmeentwicklung möglich ist.

Die Aufgabe wird durch die Merkmale des unabhängigen Anspruches 1 gelöst.

Der Grundgedanke unserer Erfindung ist hierbei darin zu sehen, daß als Dämpfungseinrichtung eine Reibbremse verwendet wird, deren Reibkraft sich elektrisch verstellen läßt.

Hierdurch können durch relativ geringe elektrische Ströme hohe Reibungskräfte erzeugt werden, so daß hierdurch eine wirksame Dämpfung realisiert werden kann.

Die Reibbremse könnte hierbei derart aufgebaut sein, daß eine Fahne ähnlich der Felge bei der Backenbremse an einem Fahrrad, zwischen zwei Backen eingeklemmt wird, wobei die Backen über einen elektrischen Linearantrieb z.B. in Form eines Tauchspulenantriebes, gegeneinander gezogen werden. Besonders vorteilhaft umfaßt die Reibbremse hierbei jedoch einen Elektromagneten und eine hiermit zusammenwirkende Fahne, die zur Erzeugung der Reibungskraft vom Elektromagneten magnetisch gegen diesen gezogen wird. Dazu muß die Fahne aus einem magnetischen Material, vorzugsweise aus einem weichmagnetischen Material bestehen. Die Reibkraft zwischen der Fahne und dem Elektromagneten ändert sich hierbei proportional zu dem durch die Spule des Elektromagneten fließenden Strom, so daß relativ einfach definierte Reibungskräfte zwischen der Fahne und dem Elektromagneten eingestellt werden können. Da die Fahnen nur sehr kleine Bewegungen durchführen müssen, ist hierduch eine sehr dynamische Änderung der Dämpfung möglich.

In einer alternativen Ausführungsform kann die Reibbremse zwei mit dem Elektromagneten zusammenwirkende Fahnen umfassen, wobei diese vorzugsweise beidseitig des Elektromagneten angeordnet sind. Hierdurch kann bei gleichem Strom eine Verdoppelung der Reibungskraft erzielt werden kann. Dies hat den Vorteil, daß bei relativ niedrigen Spannungen relativ hohe Reibkräfte und damit hohe Dämpfungen realisiert werden können..

Die Reibkraft der Reibbremse wird hierbei üblicherweise von einem dem Tastkopf zugeordneten elektronischen Regler eingestellt. Dieser elektronische Regler, der vorzugsweise einen Mikroprozessor umfaßt, kann beispielsweise eine elektronische Baugruppe im Tastkopf sein oder aber genauso gut Bestandteil der Steuerung des Koordinatenmeßgerätes sein, an dem der Tastkopf eingesetzt wird.

Besonders vorteilhaft läßt sich die Reibbremse betreiben, in dem man das Signal der Meßsysteme zur Messung der Auslenkung des nachgiebigen Teils nach der Zeit differenziert und hierzu proportional die Reibkraft der Reibbremse einstellt. Hierdurch ergibt sich eine geschwindigkeitsproportionale Reibkraft zwischen der Fahne und dem Elektromagneten, so daß hierdurch eine Flüssigkeitsdämpfung nachgebildet werden kann.

Bei der vorteilhaften Ausführungsform mit einem Elektromagneten würde dazu aus dem zeitlich differenzierten Signal der Meßsysteme ein zu dem differenzierten Signal proportionaler Spulenstrom abgeleitet, der auf den Elektromagneten aufgeschaltet wird.

In der Ruheposition der Reibbremse wird zwischen der Fahne bzw. den Fahnen und dem Elektromagneten ein relativ kleiner Spalt vorhanden sein. Damit insbesondere bei kleinen Dämpfungen reproduzierbare Reibungsverhältnisse zwischen der betreffenden Fahne und dem Elektromagneten bestehen, müßte dieser Spalt bei allen Reibbremsen konstant gefertigt werden, was jedoch praktisch einen relativ hohen Justageaufwand bedeutet. Um diesen Justageaufwand zu minimierten, kann die Spule zur Erzeugung geringer Dämpfungen mit einem Wechselstrom beaufschlagt werden. Hierdurch beginnt die betreffende Fahne zu schwingen und berührt immer nur während relativ kurzer Zeitintervalle den Elektromagneten. Hierdurch können weitgehend definierte Reibungskräfte erzielt werden und zwar für einen relativ weiten Toleranzbereich des Abstandes zwischen der betreffenden Fahne und dem Elektromagneten.

In einer besonders bevorzugten Weiterbildung kann die Dämpfungseinrichtung zusätzlich auch als Klemmeinrichtung verwendbar sein.

Im einfachsten Fall kann bei dem ersten Ausführungsbeispiel mit nur einer Fahne der Spulenstrom soweit erhöht werden, bis die zur Klemmung notwendige Kraft erreicht ist. Obwohl dies prinzipiell möglich ist, weist diese Lösung die Besonderheit auf, daß durch einen großen Spulenstrom eine relativ starke Wärmeentwicklung stattfindet, die zu Meßungenauiglceiten im Tastkopf führt.

Um für diese erste Ausführungsvariante der Reibbremse mit nur einer Fahne eine Klemmung zu realisieren, die bereits mit einem relativ niedrigen Spulenstrom arbeitet, kann auf der vom Elektromagneten abgewandten Seite der Fahne zusätzlich ein Teller vorgesehen werden, der ebenfalls vom Elektromagneten magnetisch angezogen werden kann, und deshalb aus einem magnetischen Material, vorzugsweise einem weichmagnetischen Material besteht. Während die Fahne vorzugsweise nur eine sehr geringe Stärke aufweist und mithin aufgrund des geringen Flusses mit relativ geringen Kräften gegen den Elektromagneten gezogen werden kann, sollte der Teller demgegenüber eine relativ große Stärke aufweisen. Der Teller sollte hierbei ebenfalls federnd befestigt werden und zwar derart, daß dieser erst dann vom Elektromagneten angezogen wird, wenn dieser einen definierten Spulenstrom übersteigt. Durch die relativ große Stärke des Tellers kann hierdurch ein relativ großer magnetischer Fluß fließen, so daß die Anziehungskraft um ein vielfaches größer ist als die Anziehungskraft, die der Elektromagnet auf die Fahne ausüben kann. Wird nun der Teller auf die vom Elektromagneten abgewandte Seite der Fahne gezogen, so wird hierdurch der Taststift in der betreffenden Richtung geklemmt.

Die eben beschriebenen relativ hohen Reibkräfte, die zur Klemmung erforderlich sind, können bei geringem Spulenstrom alternativ besonders vorteilhaft auch mit der oben beschriebenen zweiten Ausführungsvariante einer Reibbremse erzeugt verwenden, bei der beidseits des Elektromagneten eine Fahne angeordnet ist. Hier wird die zur Klemmung erforderliche Reibkraft nur durch die Anziehung der beiden Fahnen erzielt. Da beidseits des Elektromagneten eine Fahne angezogen wird, läßt sich bei demselben Spulenstrom gegenüber der Ausführungsvariante mit nur einer Fahne eine deutlich höhere Reibkraft erzielen. Diese Ausführungsvariante hat gegenüber der ersten Ausführungsvariante außerdem den Vorteil, daß die Kennlinie linear ist und keine Hystereseeffekte aufweist, wie sie durch das Andocken des Tellers verursacht werden. Da außerdem die Fahnen im Gegensatz zu dem Teller nur einen sehr geringen Abstand zum Elektromagneten aufweisen, kann die Reibkraft, und damit die Dämpfung, hochdynamisch geändert werden.

Vorteilhaft kann außerdem wenigstens eine Fahne im Bereich des Elektromagneten verstärkt sein, um hierdurch den magnetischen Fluß zu erhöhen.

Bei bisherigen Klemmeinrichtungen war es immer ein Problem, den Taststift in einer definierten Sollage, wie beispielsweise dem Nullpunkt des Meßsystems zur Messung der Taststiftauslenkung zu klemmen. Dies ist mit einer Klemmung gemäß dieser vorteilhaften Weiterbildung nunmehr kein Problem mehr. Hierzu kann der elektronische Regler mittels der Reibbremse den nachgiebigen Teil des Tastkopfes, an dem der Taststift befestigt ist, zunächst in einer beliebigen Position klemmen. Danach veranlaßt der elektronische Regler den der betreffenden Reibbremse zugeordneten Meßkraftgenerator dazu impulsartig Meßkräfte derartig zu erzeugen, so daß diese wie "Hammerschläge" das bewegliche Teil in Richtung der Sollage, also beispielsweise den Nullpunkt des Auslenkungsmeßsystems, verschieben. Ist diese Sollage erreicht, so ist der Taststift in der vordefinierten Sollage geklemmt.

Desweiteren kann bei einer Antastung der Taststift gleichfalls auch über die Klemmeinrichtung entprellt werden. Dies funktioniert derart, daß der elektronische Regler exakt beim Antasten des Werkstückes mit dem Taststift kurzzeitig das nachgiebige Teil des Tastkopfes über die Reibbremse klemmt. Der Antastzeitpunkt kann hierbei aus den Signalen der Meßsysteme des Tastkopfes bestimmt werden.

Die Führungen zur Führung des nachgiebigen Teils können hierbei unterschiedlich sein. Es kann sich beispielsweise um Federparallelogramme handeln oder um Drehgelenke oder Linearführungen handeln.

Auch die Meßsysteme zur Messung der Auslenkung des nachgiebigen Teils können unterschiedlich sein. Es könnte sich um Inkrementalmaßstäbe handeln, die von einem Ablesekopf ausgelesen werden. Es kann sich jedoch auch um Tauchspulen handeln.

Selbstverständlich kann die erfindungsgemäße Reibbremse genauso auch bei Tastköpfen eingesetzt werden, bei denen die Meßkraft nicht über Meßkraftgeneratoren erzeugt wird, sondern über Federn, die bei einer Auslenkung des Taststiftes aus seiner Ruhelage gespannt werden. Lediglich das oben beschriebene Verfahren zum Klemmen des Taststiftes in einer vordefinierten Sollage läßt sich hiermit nicht durchführen. Andererseits ist dieses Verfahren auch nicht zwingend notwendig, da der Taststift nicht unbedingt in einer fest vordefinierten Position geklemmt werden muß. Vielmehr läßt sich über die Meßsysteme zur Messung der Taststiftauslenkung exakt die Auslenkung des Taststiftes ermitteln und bei der Meßdatenauswertung berücksichtigen.

Insbesondere läßt sich bei derartigen Tastköpfen, bei denen die Meßkraft über Federn erzeugt wird, die Reibbremse auch dazu verwenden, um bei Beschleunigungsvorgängen des Tastkopfes durch das Koordinatenmeßgerät, den Taststift in seiner Ruheposition zu halten. Durch die Trägheit der Masse des Taststiftes neigt dieser nämlich dazu bei Beschleunigungsvorgängen des Tastkopfes entgegen der Beschleunigungsrichtung aus seiner Ruheposition ausgelenkt zu werden. Dies kann verhindert werden, indem bei Beschleunigungsvorgängen eine geeignete Dämpfung eingestellt wird oder der Taststift sogar in der betreffenden Richtung geklemmt wird. Natürlich kann diese Vorgehensweise auch bei Tastköpfen mit Meßkraftgeneratoren verwendet werden.

Weitere Vorteile und Weiterbildungen der Erfindung ergeben sich aus den Figuren. Hierin zeigen:
- Figur 1: einen messenden Tastkopf;
- Figur 2: ein einzelnes Federparallelogramm des Tastkopfes gemäß Figur 1 im Schnitt mit einer erfindungsgemäßen Reibbremse (19);
- Figur 3: die erfindungsgemäße Reibbremse (19) im Schnitt in der Ruhestellung;
- Figur 4: die Reibbremse (19) gemäß Figur 3 mit angezogener Fahne (23);
- Figur 5: die Reibbremse (19) gemäß Figur 3 mit angezogener Fahne (23) und angezogenem Teller (24); und
- Figur 6: Diagramm der an den Elektromagneten der Reibbremse gemäß Figuren 3 bis 5 angelegten elektrischen Spannung (U_{SP}) um die Dämpfungs- und Klemmungsvorgänge zu erläutern
- Figur 7: Diagramm, das schematisch für die Reibbremse gemäß Figuren 3 bis 5 die an den Elektromagneten angelegte elektrische Spannung (U_{Sp}) gegen die Reibkraft (F_{Reib}) darstellt
- Figur 8: eine zweite Ausführungsform einer erfindungsgemäßen Reibbremse (27) mit auf beiden Seiten des Elektromagneten angeordneter Fahne (28 und 29)
- Figur 9: Diagramm, das schematisch für die Reibbremse gemäß Figur 8 die an den Elektromagneten angelegte elektrische Spannung (U_{Sp}) gegen die Reibkraft (F_{Reib}) darstellt

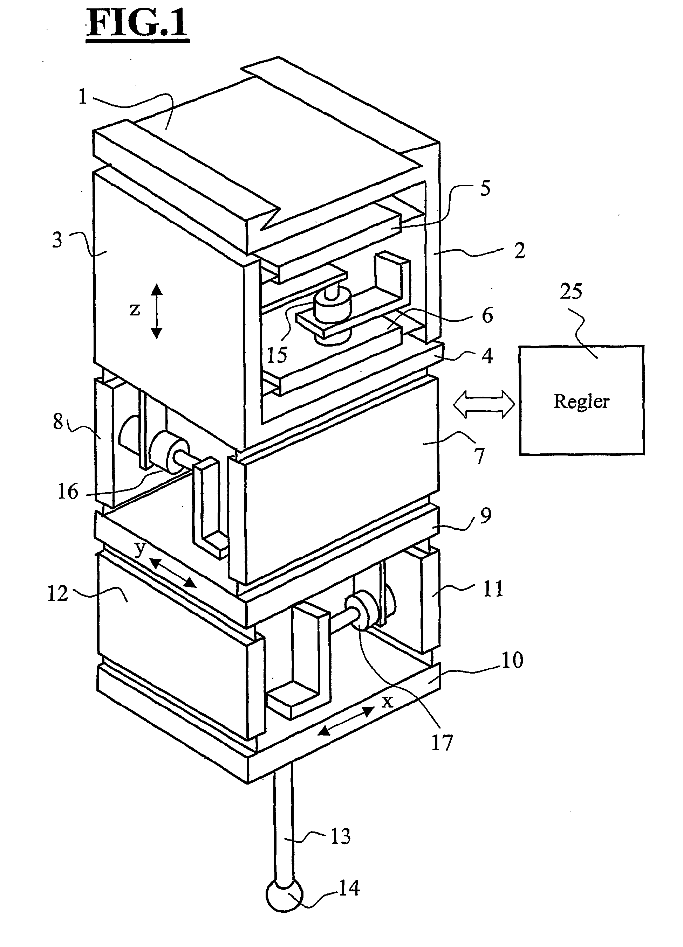

Der in Figur 1 dargestellte Tastkopf besitzt ein gehäusefestes Teil in Form eines Winkels, dessen oberer waagrechter Schenkel (1) eine Aufnahmeschwalbe zur Befestigung des Tastkopfes an der Pinole des hier nicht näher dargestellten Koordinatenmeßgerätes aufweist. Mit dem vertikalen Schenkel (2) des gehäusefesten Teils ist über ein paar in der Mitte verstärkte Federbleche (5) und (6) der vertikale Teil (3) eines weiteren L-förmigen Winkels verbunden. Die hieraus resultierende Parallelogrammführung bildet die z-Führung des Tastkopfes.

Am waagerechten Teil (4) des in (z) beweglichen Winkels ist über ein paar verstärkter Federbleche (7) und (8) eine Platte (9) beweglich aufgehängt, die die y-Führung des Tastkopfes bildet. An dieser wiederum hängt ein um 90° gegenüber den Federblechen (7) und (8) gedrehtes drittes Paar Federbleche (11) und (12), das die Platte (9) mit einer weiteren Platte (10) verbindet, welche die x-Führung des Tastkopfes darstellt. Das hierdurch in den Koordinatenrichtungen (x, y, z) nachgiebige Teil (10) des Tastkopfes trägt den Taststift (13) mit der Tastkugel (14). Jede der drei Parallelogrammführungen ist mit einem Meßkraftgenerator (18) nach Art eines Tauchspulenantriebes versehen, der jedoch in der dargestellten Figur 1 nicht zu sehen ist. Dargestellt sind außerdem die drei Meßsysteme (15), (16), (17), mit denen die Auslenkung der geführten Teile des Tastkopfes in den drei genannten Koordinatenrichtungen (x, y, z) laufend ermittelt wird. Hierbei handelt es sich um sogenannte LVDT-Systeme, das sind im wesentlichen bei einer Trägerfrequenz betriebene Induktionsspulen, die ein der Stellung des darin verschiebbaren Kerns proportionales Wegsignal abgeben. Außerdem weist jede der drei Pärallelogrammführungen eine Reibbremse auf, mit der die genannten Führungen entweder gedämpft werden können oder aber geklemmt werden können.

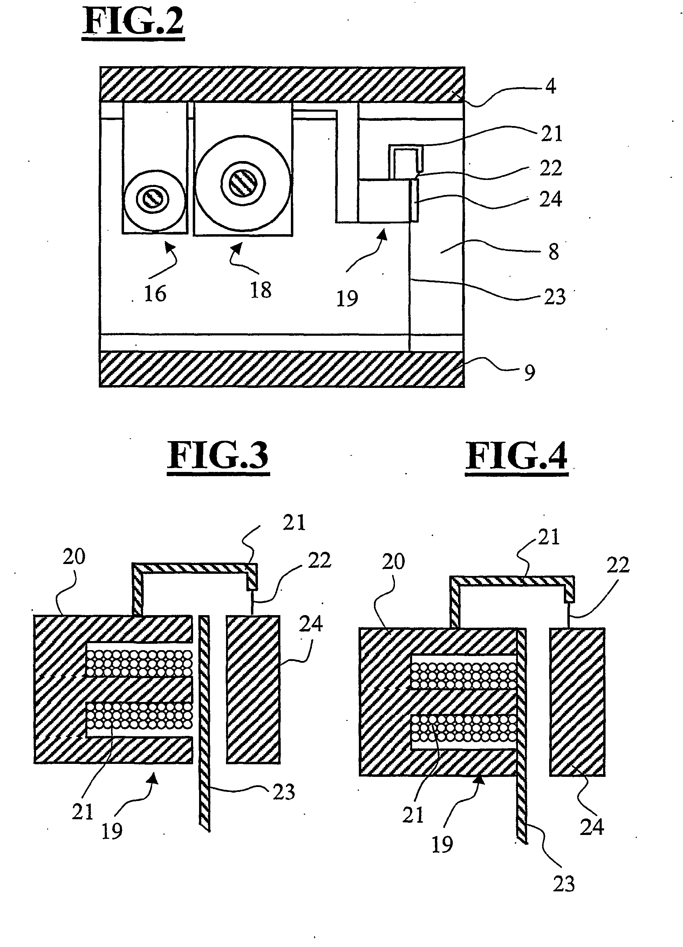

Auch die Reibbremsen (19) sind in Figur 1 nicht zu sehen. Zur näheren Erläuterung der betreffenden Bauteile wird deshalb nachfolgend auf Figur 2 verwiesen, die selektiv die y-Führung des in Figur 1 gezeigten Tastkopfes im Schnitt zeigt. Wie hieraus zu sehen befindet sich auf der linken Seite der y-Führung das oben bereits beschriebene Meßsystem (16), mit dem die Auslenkung in der Senkrecht zur Zeichenebene stehenden Richtung gemessen werden kann. Mit der Bezugsziffer (18) ist weiterhin ein Meßkraftgenerator beschrieben, mit dem ebenfalls in der senkrecht zur Zeichenebene stehenden Richtung zwischen den Teilen (4) und (9) eine Meßkraft aufgeschaltet werden kann. Der Meßkraftgenerator (18) ist hierbei nach Art eines Tauchspulenantriebes ausgebildet.

Darüber hinaus weist die betreffende Y-Führung auch noch eine Reibbremse (19) auf, mit der die Y-Führung in der senkrecht zur Zeichenebene stehenden Richtung sowohl gedämpft, wie auch geklemmt werden kann, wie dies nachfolgend anhand der Figuren 3, 4 und 5 detailliert erläutert wird.

Die Aufnahme der Meßwerte der drei Meßsysteme (15), (16), (17) zur Messung der Auslenkung des beweglichen Teils (10) und somit des Taststiftes (13), sowie die Ansteuerung der drei Meßkraftgeneratoren (18) und der drei Reibbremsen (19) erfolgt über den in Figur 1 nur schematisch dargestellten elektronischen Regler (25). Hierbei handelt es sich in diesem Ausführungsbeispiel um eine mikroprozessorgesteuerte elektronische Baugruppe in der Steuerung des Koordinatenmeßgerätes.

Figur 3 zeigt eine erste Ausführungsform einer erfindungsgemäßen Reibbremse (19) im Schnitt. Wie hieraus zu sehen ist, ist das Kernstück der Reibbremse ein topfförmig ausgebildeter Elektromagnet mit einem Flußführungsteil (20) aus weichmagnetischem Material und einer Spule (21), die den inneren Teil des Flußführungsteils (20) umschlingt. Am offenen Ende des Elektromagneten ist hierbei eine Fahne (23) vorgesehen, die einen definierten Abstand zum Flußführungsteil (20) des Elektromagneten aufweist. Zusätzlich ist am Elektromagnet eine starre Halterung (21) befestigt. Am anderen Ende der Halterung (21) ist über eine Blattfeder (22) ein Teller (24) befestigt. Der Teller (24) weist hierbei eine erheblich größere Stärke auf als die Fahne (23). Zur Dämpfung der Bewegungen in y-Richtung, das heißt also des nachgiebigen Teiles (9) gegenüber dem Teil (4) in der zur Zeichenebene senkrechten Richtung, kann nunmehr auf die Spule (21) ein definierter Strom aufgeschaltet werden. Hierdurch entsteht zwischen den Enden des Flußführungsteils (20) und der ferromagnetischen Fahne (23) eine magnetische Anziehungskraft, die die Fahne (23) gegen die Enden des Flußführungsteils (20) zieht, wie dies Figur 4 zeigt. Hierdurch entsteht eine definierte Reibungskraft (F_{Reib}), die durch Variation des Spulenstroms in einem weiten Bereich verändert werden kann.

In einer vorteilhaften Ausführungsform wird man jedoch versuchen eine Flüssigkeitsdämpfung, mit einer "Newtonschen Reibung" nachzubilden. Dies ist möglich, in dem eine geschwindigkeitsproportionale Dämpfung realisiert wird, das heißt also, indem der Spulenstrom und damit die Reibungskraft (F_{Reib}) zwischen der Fahne (23) und dem Flußführungsteil (20) proportional zur Geschwindigkeit in der betreffenden Richtung gewählt wird. Das Signal für den Spulenstrom kann durch einfache zeitliche Ableitung des Auslenkungssignals des Meßsystems (16) ermittelt werden. Die Ableitung kann entweder digital erfolgen oder aber auch analog, in dem das Signal über einen Kondensator differenziert wird.

Wie bereits oben ausgeführt, läßt sich der Spalt zwischen der Fahne (23) und dem Flußführungsteil (20) nur sehr schwierig exakt einstellen, so daß für jeden neuen Tastkopf zunächst die Dämpfung bei kleinen Spulenströmen ermittelt werden müßte. Außerdem ist es je nach Dimensionierung der Spule auch möglich, daß infolge der Restmagnetisierung des Flußführungsteils (20) und der Fahne (23) die Fahne (23) auch dann am Elektromagneten haften bleibt, wenn der Spulenstrom ausgeschaltet ist. Um dieses Problem in den Griff zu kriegen, kann die Spule (21) mit einem Wechselstrom beaufschlagt werden, so daß entsprechend den Spulenströmen die Fahne (23) immer nur zeitweise am Flußführungsteil (20) anliegt. Hierdurch können sehr geringe Dämpfungen realisiert werden die über einen größeren Bereich des Abstandes zwischen Fahne (23) und den Enden des Flußführungsteils (20) weitgehend konstant sind.

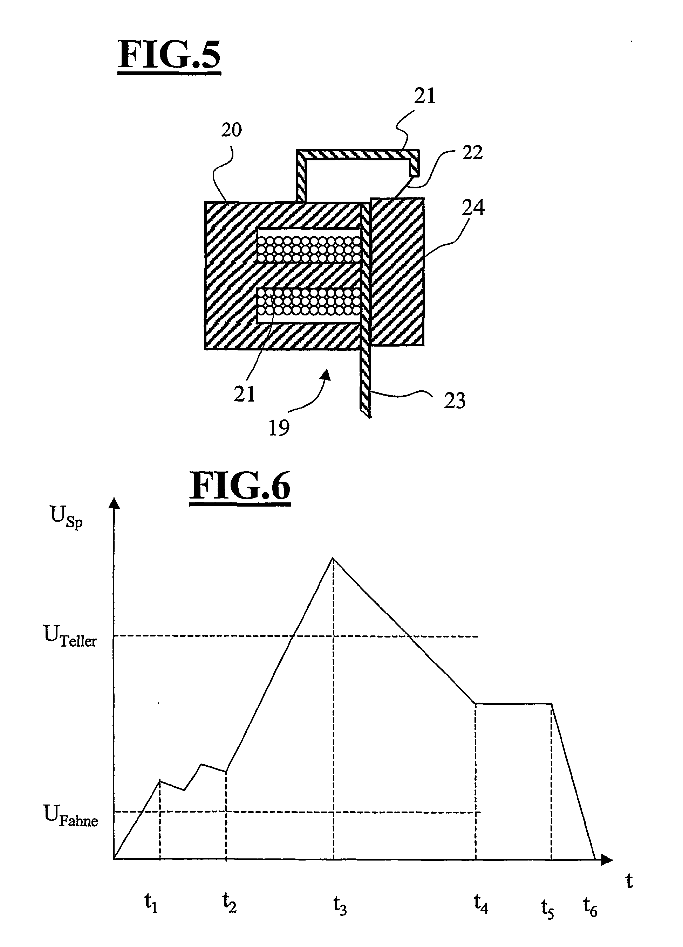

Die Reibbremse (19) kann zusätzlich auch zum Klemmen der y-Führung verwendet werden. Hierbei wird der Spulenstrom nunmehr so stark erhöht, bis auch der Teller (24) vom Elektromagneten gegen das Flußführungsteil (20) gezogen wird, wie dies Figur 5 darstellt. Da die Stärke des Tellers (24) erheblich größer ist als die Stärke der Fahne (23) ergibt sich hierdurch ein erheblich größerer Fluß durch den Teller (24) und somit auch eine erheblich größere Kraft in Richtung auf den Elektromagneten. Durch die erheblich größere Kraftwirkung wird die Fahne (23) zwischen dem Flußführungsteil (20) und dem Teller (24) so stark eingeklemmt, und hierdurch die Reibkraft (F_{Reib}) so stark erhöht, daß die Führung in y-Richtung hierdurch geklemmt wird.

Oben wurde durchgängig vom Spulenstrom gesprochen, der in die Spule eingeprägt wird. Da die Wärmeentwicklung der Spule nur sehr gering ist, kann jedoch davon ausgegangen werden, daß der Wechselstromwiderstand der Spule näherungsweise konstant bleibt, so daß der Spulenstrom immer näherungsweise proportional zur angelegten Spannung ist. Damit kann die Reibungskraft zwischen der Fahne (23) und dem Flußführungsteil (20) auch als proportional zur an die Spule angelegten Spannung (U_{SP}) angesehen werden.

Der Spannungsverlauf bei der Verwendung der Reibbremse (19) zur Dämpfung und zur Klemmung der y-Führung soll nun mehr rein beispielhaft in einem Diagramm dargestellt werden, in dem die Zeit (t) gegen die Spulenspannung (U_{SP}) aufgetragen ist. Zunächst einmal wird bis zum Zeitpunkt (t1) hierbei die Spulenspannung (U_{SP}) soweit erhöht, bis die Spannung (U_{Fahne}) überschritten ist. Ab dieser Spannung wird die feromagnetische Fahne an die Enden des Flußführungsteils (20) angezogen. Durch unterschiedliche Variierung der Spannung wird nach dem Zeitpunkt (t1) die Reibkraft zwischen der Fahne (23) und dem Flußführungsteil (20) bis zum Zeitpunkt (t2) verändert, um das Teil und mithin den Taststift (13) unterschiedlich stark zu dämpfen. Hiernach soll nunmehr eine Klemmung der y-Führung vorgenommen werden. Dazu wird die Spannung (U_{SP}) bis zum Zeitpunkt (t3) so lange erhöht, bis die Spannung (U_{Teller} ) überschritten ist. Die Spannung (U_{Teller}) bezeichnet hierbei diejenige Spannungsschwelle, ab der der Teller (24) vom Flußführungsteil (20) angezogen wird. Nachdem nun der Teller (24) vom Flußführungsteil (20) angezogen ist und mithin die Fahne (23) geklemmt worden ist, kann die Spannung (U_{SP}) sofort wieder abgesenkt werden, wie dies zum Zeitpunkt (t4) ersichtlich ist. Mit der zwischen dem Zeitpunkt (t4) bis zum Zeitpunkt (t5) eingezeichneten Spannung (U_{SP}) kann die Klemmung in ihrer Stärke variiert werden. Um die Klemmung wieder zu lösen wird im Zeitpunkt (t6) die Spannung wieder abgeschaltet, so daß sowohl der Teller (24), wie auch die Fahne (23) sich von den Enden des Flußführungsteils (20) lösen.

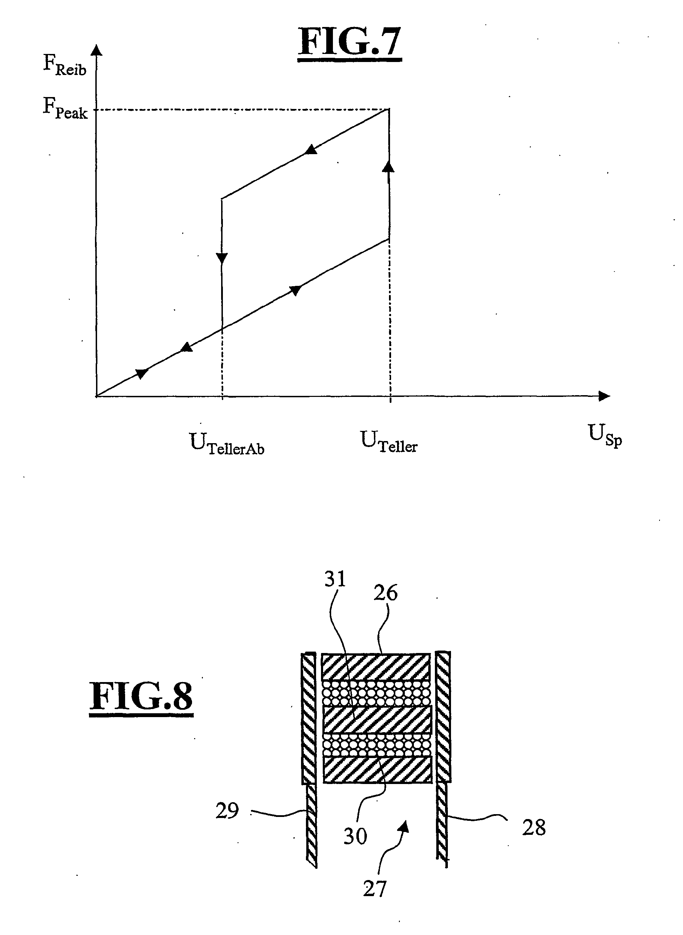

In Figur 7 wird für die beschriebene Reibbremse ein rein schematisches Diagramm gezeigt, in dem grob die Kennlinie der in die Spule eingeprägten Spannung (U_{Sp}) gegenüber der erzeugten Reibkraft (F_{Reib}) aufgezeichnet ist. Die eingezeichneten Pfeile zeigen den Verlauf der Kurve. Ausgehend vom Koordinatenursprung des Diagramms wächst die Reibkraft (F_{Reib}) näherungsweise proportional zur Spannung (U_{Sp}) bis zur Spannung (U_{Teller}). Ab dieser Spannung wird, wie bereits oben beschrieben, zusätzlich der Teller (24) angezogen, so daß dann sprunghaft die Reibkraft auf den Wert (F_{Peak}) steigt. Senkt man nunmehr die Spannung (U_{Sp}) wieder ab, so wird die Reibkraft (F_{Reib}) ebenfalls wieder geringer, allerdings auf einem höheren Niveau. Ab der Spannung (U_{TellerAb}) wird die Haltekraft der Spule (19) dann so gering, daß der Teller (24) durch die Blattfeder (22) wieder vom Elektromagneten zurück in seine Ursprungslage gezogen wird, so daß die Reibkraft (F_{Reib}) dann sprunghaft fällt. Beim weiteren Absenken der Spannung (U_{Sp}) in Richtung Koordinatenursprung bewegt sich die Kurve wieder auf der ursprünglichen Kurve.

Figur 8 hingegen zeigt eine zweite Ausführungsform einer erfindungsgemäßen Reibbremse (27). In dieser Ausführungsform ist ebenfalls ein Elektromagnet vorgesehen, der Flußführungsteile (26 und 31) und eine Spule (30) umfaßt. Außerdem sind zwei Fahnen (28 und 29) vorgesehen, die beidseitig des Elektromagneten so angeordnet sind, daß sie beidseitig den magnetischen Fluß zwischen den Polen der Magnetspule herstellen. Die Fahnen können damit gleichzeitig angezogen werden. Die Fahnen sind außerdem gegenüber der Fahne (23) des ersten Ausführungsbeispiels etwas im Bereich des Elektromagneten verstärkt, um bereits bei kleinen Spannungen eine größere Querschnittsfläche für den Fluß zu erreichen. Die Besonderheit dieser zweiten Ausführungsform ist hierbei darin zu sehen, daß sich auch bei relativ niedrigen Spannungen (U_{Sp}) ohne die Hystereseeffekte des Tellers (24) relativ hohe Reibkräfte (F_{Reib}) und damit eine hohe Dämpfung realisieren lassen, die auch zur Klemmung der Führung ausreichen. Hierdurch ist es auch möglich die Dämpfung sehr dynamisch zu ändern, da die Fahnen nur sehr kleine Bewegungen durchführen müssen.

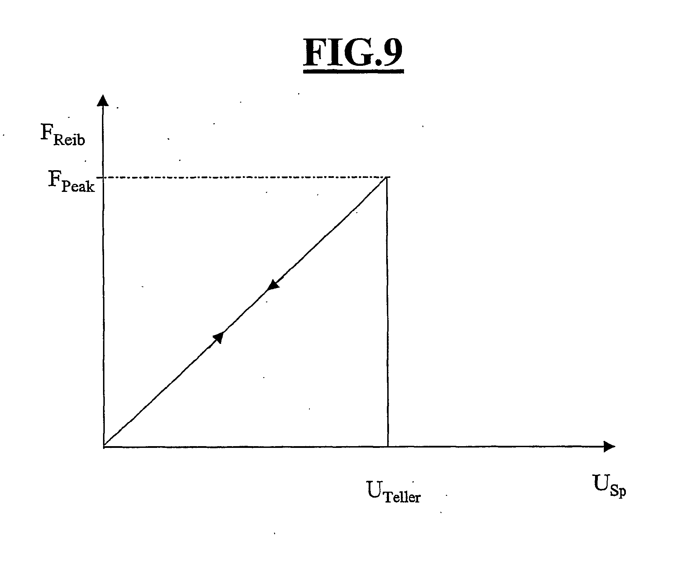

Das Figur 7 entsprechende Diagramm für diese Reibbremse (27) ist in Figur 9 gezeigt. Wie hieraus ersichtlich, ist die Reibkraft (F_{Reib}) zu der an der Spule (30) anliegenden Spannung proportional.

Der Betrieb dieser zweiten erfindungsgemäßen Ausführungsform einer Reibbremse erfolgt vollkommen analog, wie dies bereits im Zusammenhang mit der ersten Ausführungsform gemäß Figuren 3 bis 5 beschrieben wurde, mit einem einzigen Unterschied; die zum Dämpfen bzw. zum Klemmen notwendige Reibkräfte (F_{Reib}) werden nicht gemäß der Kennlinie nach Figur 7 eingestellt, wie dies im Zusammenhang mit Figur 6 erläutert wurde, sondern gemäß der Kennlinie nach Figur 9.

Oftmals ist es wünschenswert hierbei die Führung derart zu klemmen, daß die Klemmung genau im Nullpunkt des Meßsystems (16) der Führung erfolgt. Um dies zu erreichen, kann so vorgegangen werden, daß zunächst einmal die Führung in einer beliebigen Stellung geklemmt wird. In einem nächsten Schritt werden vom Meßkraftgenerator (18) entgegen der Auslenkungsrichtung impulsartig Meßkräfte erzeugt, die entgegen der Auslenkungsrichtung arbeiten. Hierdurch ergeben sich Meßkräfte, die ähnlich wie Hammerschläge die Führung schrittweise in Richtung der Nullposition verrücken. Sobald die durch das Meßsystem (16) gemessene Auslenkung in die Nullage zurück gekehrt ist, ist das Meßsystem (16) in der Nullage geklemmt. Hierdurch können aufwendige Justagevorgänge vermieden werden.

Wie oben bereits ausgeführt kann der Taststift natürlich auch in jeder beliebigen anderen Sollage nach dem beschriebenen Verfahren geklemmt werden.

Des weiteren kann die Klemmung gleichfalls zum Entprellen bei einer Antastung verwendet werden. Bei einer üblichen Antastung wird durch den beim Antasten entstehenden elastischen Stoß der Taststift (13) geprellt. Ein derartiges prellen kann weitgehend unterdrückt werden, wenn im Zeitpunkt der Antastung der Taststift kurzzeitig in seiner Stellung geklemmt wird und die Klemmung des Taststiftes unmittelbar nach der Antastung wieder aufgehoben wird.

Im übrigen kann die Reibbremse auch dazu verwendet werden, um bei Beschleunigungsvorgängen des Tastkopfes durch das Koordinatenmeßgerät, den Taststift (13) in seiner Ruheposition zu halten. Durch die Trägheit der Masse des Taststiftes (13) neigt dieser nämlich dazu bei Beschleunigungsvorgängen des Tastkopfes entgegen der Beschleunigungsrichtung aus seiner Ruheposition ausgelenkt zu werden. Obwohl dies mittels einer entsprechenden Gegenkraft durch die Meßkraftgeneratoren (18) verhindert werden kann, kann dies auch alternativ verhindert werden, indem bei Beschleunigungsvorgängen eine geeignete Dämpfung eingestellt wird oder der Taststift sogar in der betreffenden Richtung geklemmt wird. Die Beschleunigung kann hierbei beispielsweise aus den Fahrwegdaten der Steuerung des Koordinatenmeßgerätes oder über Beschleunigungssensoren entnommen werden. Diese Vorgehensweise bietet sich damit insbesondere bei Tastköpfen ohne Meßkraftgeneratoren an, deren Meßkraft mechanisch mittels Federn erzeugt wird.

Es sei der Vollständigkeit halber abschließend erwähnt, daß natürlich auch im geklemmten Zustand die Haftkraft, die zum Auslenken des Taststiftes in der betreffenden Koordinatenrichtung aus der geklemmten Stellung überwunden werden muß, durch Variation der Spannung (U_{SP}) verändert werden kann. Für kleinere Taststifte beispielsweise wird man insbesondere für den Handbetrieb, in dem das Koordinatenmeßgerät manuell über Betätigungshebel vom Bediener des Koordinatenmeßgerätes verfahren werden kann, üblicherweise eine kleinere Haftkraft aufschalten, um bei einer ungewollten Kollision ein Abbrechen des Taststiftes zu vermeiden.

Außerdem sei nochmals erwähnt, daß das beschriebene Beispiel nur ein Ausführungsbeispiel ist. Natürlich muß der Elektromagnet nicht als Topfmagnet ausgeführt sein. Das Flußführungsteil könnte sich beispielsweise genauso gut auf einen Kern beschränken. Auch der Teller (24) muß beispielsweise nicht rund sein, sondern kann genauso gut auch eine andere Form annehmen.

## Patentansprüche

1. Tastkopf für ein Koordinatenmeßgerät mit Meßsystemen (15,16,17) zur Messung der Auslenkung des nachgiebigen Teils (10) des Tastkopfes sowie einer Dämpfungseinrichtung zum Dämpfen des nachgiebigen Teils (10) in vorgebbaren Richtungen, **dadurch gekennzeichnet, daß** die Dämpfungseinrichtung wenigstens eine Reibbremse (19,27) umfaßt, deren Reibkraft elektrisch verändert werden kann.

2. Tastkopf nach Anspruch 1, **dadurch gekennzeichnet, daß** die Reibbremse (19, 27) einen Elektromagneten und eine hiermit zusammenwirkende Fahne (23, 28, 29) umfaßt, die vom Elektromagneten magnetisch angezogen werden kann.

3. Tastkopf nach Anspruch 2, **dadurch gekennzeichnet, daß** die Reibbremse (27) zwei mit dem Elektromagneten zusammenwirkende Fahnen (28 und 29) umfasst.

4. Tastkopf nach einem der Ansprüche 2 oder 3, **dadurch gekennzeichnet, daß** wenigstens eine Fahne (23, 28, 29) im Bereich des Elektromagneten verstärkt ist.

5. Tastkopf nach einem der Ansprüche 1 bis 4, **dadurch gekennzeichnet, daß** die Dämpfungseinrichtung auch als Klemmeinrichtung verwendbar ist.

6. Tastkopf nach Anspruch 5, **dadurch gekennzeichnet, daß** auf der dem Elektromagneten abgewandten Seite der Fahne (23) beabstandet zusätzlich ein federnd befestigter Teller (24) angeordnet ist, der ebenfalls vom Elektromagneten magnetisch angezogen werden kann.

7. Tastkopf nach Anspruch 6, **dadurch gekennzeichnet, daß** die Stärke des Tellers (24) größer ist, als die Stärke der Fahne (23).

8. Tastkopf nach einem der Ansprüche 1 bis 7, **dadurch gekennzeichnet, daß** dem Tastkopf ein elektronischer Regler (25) zugeordnet ist, der die Reibkraft der Reibbremse elektrisch einstellt.

9. Tastkopf nach Anspruch 8, **dadurch gekennzeichnet, daß** der elektronische Regler (25) die Reibkraft der Reibbremse proportional zur zeitlichen Ableitung der gemessenen Auslenkung in der betreffenden Richtung (x,y,z) einstellt.

10. Tastkopf nach Anspruch 8 oder 9, **dadurch gekennzeichnet, daß** der elektronische Regler die Reibbremse zum Entprellen des Tastkopfes bei einem Antastvorgang kurzzeitig während des Antastvorganges klemmt.

11. Tastkopf nach einem der Ansprüche 8 bis 10, bei dem die Reibbremse einen Elektromagneten und eine hiermit zusammenwirkende Fahne (23, 28, 29) umfaßt, **dadurch gekennzeichnet, daß** der elektronische Regler (25) den Elektromagneten zur Erzeugung einer geringen Dämpfung mit einem Wechselstrom beaufschlagt.

12. Tastkopf nach einem der Ansprüche 8 bis 11, mit einer Reibbremse die einen Elektromagneten und eine hiermit zusammenwirkende Fahne (23) und einen federnd aufgehängten Teller (24) umfaßt, **dadurch gekennzeichnet, daß** der elektronische Regler (25) zum Klemmen der Reibbremse den Elektromagneten-zunächst mit einem Strom bzw. einer Spannung (U_{SP}) oberhalb einer Schwelle (U_{Teller}) beaufschlagt, so daß der federnd aufgehängte Teller (24) gegen den Elektromagneten gezogen wird und nach dem Anziehen des Tellers den Strom bzw. die Spannung auf unterhalb der Schwelle (U_{Teller}) absenkt.

13. Tastkopf nach einem der Ansprüche 8 bis 12, wobei der Tastkopf zusätzlich wenigstens einen durch den elektronischen Regler (25) ansteuerbaren Meßkraftgenerator (18) aufweist, **dadurch gekennzeichnet, daß** der elektronische Regler (25) zum Klemmen des nachgiebigen Teils (10) in einer vorgegebenen Sollage eines zugehörigen Meßsystems (16) die Reibbremse (19, 27) in einer beliebigen Lage des nachgiebigen Teils (10) klemmt und den Meßkraftgenerator (18) entgegen der Richtung der Auslenkung gegenüber der Sollage impuslartig Meßkräfte erzeugen läßt, bis das zugehörige Meßsystem (16) sich in seiner Sollage befindet.

14. Tastkopf nach einem der Ansprüche 8 bis 13, **dadurch gekennzeichnet, daß** der elektronische Regler (25) während Beschleunigungsvorgängen des Tastkopfes die Reibungskraft der Reibbremse (19, 27) erhöht oder die Reibbremse klemmt.

## Claims

1. Probe for a coordinate measuring machine having measurement systems (15, 16, 17) for measuring the deflection of the flexible part (10) of the probe, as well as a damping device for damping the flexible part (10) in prescribable directions, **characterized in that** the damping device comprises at least one friction brake (19, 27) whose friction force can be varied electrically.

2. Probe according to Claim 1, **characterized in that** the friction brake (19, 27) comprises an electromagnet and a lug (23, 28, 29) which cooperates therewith and can be magnetically attracted by the electromagnet.

3. Probe according to Claim 2, **characterized in that** the friction brake (27) comprises two lugs (28 and 29) cooperating with the electromagnet.

4. Probe according to either of Claims 2 and 3, **characterized in that** at least one lug (23, 28, 29) is reinforced in the region of the electromagnet.

5. Probe according to one of Claims 1 to 4,
**characterized in that** the damping device can also be used as a clamping device.

6. Probe according to Claim 5, **characterized in that** a resiliently fastened plate (24) which can likewise be magnetically attracted by the electromagnet is additionally arranged at a spacing on the side of the lug (23) averted from the electromagnet.

7. Probe according to Claim 6, **characterized in that** the thickness of the plate (24) is greater than the thickness of the lug (23).

8. Probe according to one of Claims 1 to 7, **characterized in that** the probe is assigned an electronic controller (25) which sets the friction force of the friction brake electrically.

9. Probe according to Claim 8, **characterized in that** the electronic controller (25) sets the friction force of the friction brake in a fashion proportional to the time derivative of the measured deflection in the relevant direction (x,y,z).

10. Probe according to Claim 8 or 9, **characterized in that** the electronic controller clamps the friction brake for a short time during a scanning operation in order to debounce the probe in the course of the scanning operation.

11. Probe according to one of Claims 8 to 10, in which the friction brake comprises an electromagnet and a lug (23, 28, 29) cooperating therewith, **characterized in that** the electronic controller (25) applies an alternating current to the electromagnet in order to produce a slight damping.

12. Probe according to one of Claims 8 to 11, having a friction brake that comprises an electromagnet and a lug (23) cooperating therewith, and a resiliently suspended plate (24), **characterized in that**, in order to clamp the friction brake, the electronic controller (25) firstly applies a current or a voltage (U_{SP}) above a threshold (Uₚₗₐₜₑ) to the electromagnet such that the resiliently suspended plate (24) is drawn against the electromagnet and lowers the current or the voltage to below the threshold (Uₚₗₐₜₑ) after the attraction of the plate.

13. Probe according to one of Claims 8 to 12, the probe additionally having at least one measuring force generator (18) which can be driven by the electronic controller (25), **characterized in that** in order to clamp the flexible part (10) in a prescribed desired position of an associated measurement system (16) the electronic controller (25) clamps the friction brake (19, 27) in an arbitrary position of the flexible part (10) and causes the measuring force generator (18) impulsively to generate measuring forces against the direction of the deflection in relation to the desired position until the associated measurement system (16) is located in its desired position.

14. Probe according to one of Claims 8 to 13,
**characterized in that**, during acceleration processes of the probe, the electronic controller (25) increases the friction force of the friction brake (19, 27) or clamps the friction brake.

## Revendications

1. Tête de palpage pour un appareil de mesure de coordonnées comprenant des systèmes de mesure (15, 16, 17) pour mesurer la déviation de la partie flexible (10) de la tête de palpage ainsi qu'un dispositif d'amortissement pour amortir la partie flexible (10) dans des directions pouvant être prédéfinies, **caractérisé en ce que** le dispositif d'amortissement comprend au moins un frein à friction (19, 27) dont la force de friction peut être modifiée électriquement.

2. Tête de palpage selon la revendication 1, **caractérisée en ce que** le frein à friction (19, 27) comprend un électroaimant et un fanion (23, 28, 29) qui interagit avec celui-ci et qui peut être attiré par la force magnétique de l'électroaimant.

3. Tête de palpage selon la revendication 2, **caractérisée en ce que** le frein à friction (27) comprend deux fanions (28 et 29) qui interagissent avec l'électroaimant.

4. Tête de palpage selon l'une des revendications 2 ou 3, **caractérisée en ce qu'**au moins un fanion (23, 28, 29) est renforcé dans la zone de l'électroaimant.

5. Tête de palpage selon l'une des revendications 1 à 4, **caractérisée en ce que** le dispositif d'amortissement peut également être utilisé comme un dispositif de serrage.

6. Tête de palpage selon la revendication 5, **caractérisée en ce que** du côté du fanion (23) à l'opposé de l'électroaimant est en plus disposé à l'écart un plateau (24) monté sur ressort, lequel peut également être attiré par la force magnétique de l'électroaimant.

7. Tête de palpage selon la revendication 6, **caractérisée en ce que** l'épaisseur du plateau (24) est supérieure à l'épaisseur du fanion (23).

8. Tête de palpage selon l'une des revendications 1 à 7, **caractérisée en ce qu'**un régulateur électronique (25) est associé à la tête de palpage, lequel règle électriquement la force de friction du frein à friction.

9. Tête de palpage selon la revendication 8, **caractérisée en ce que** le régulateur électronique (25) règle la force de friction du frein à friction proportionnellement à la dérivée dans le temps de la déviation mesurée dans la direction (x, y, z) concernée.

10. Tête de palpage selon la revendication 8 ou 9, **caractérisée en ce que** le régulateur électronique serre le frein à friction pendant un court instant pendant un processus de palpage afin d'annuler le battement de la tête de palpage lors du processus de palpage.

11. Tête de palpage selon l'une des revendications 8 à 10, dans laquelle le frein à friction comprend un électroaimant et un fanion (23, 28, 29) qui interagit avec celui-ci, **caractérisée en ce que** le régulateur électronique (25) applique à l'électroaimant un courant alternatif pour générer un amortissement peu important.

12. Tête de palpage selon l'une des revendications 8 à 11, comprenant un frein à friction qui comprend un électroaimant et un fanion (23) qui interagit avec celui-ci ainsi qu'un plateau (24) monté sur ressort, **caractérisée en ce que** le régulateur électronique (25), pour serrer le frein à friction, applique tout d'abord à l'électroaimant un courant ou une tension (U_{SP}) au-dessus d'un seuil (U_{Plateau}) , de sorte que le plateau (24) monté sur ressort est attiré contre l'électroaimant et le courant ou la tension chute au-dessous du seuil (U_{Plateau}) après l'attraction du plateau.

13. Tête de palpage selon l'une des revendications 8 à 12, la tête de palpage présentant en plus au moins un générateur de force de mesure (18) pouvant être commandé par le régulateur électronique (25), **caractérisée en ce que** le régulateur électronique (25), pour serrer la partie flexible (10) dans une position de consigne prédéfinie d'un système de mesure (16) associé, serre le frein à friction (19, 27) dans une position quelconque de la partie flexible (10) et laisse le générateur de force de mesure (18) générer des forces de mesure impulsionnelles à l'opposé du sens de la déviation par rapport à la position de consigne, jusqu'à ce que le système de mesure (16) associé se trouve dans sa position de consigne.

14. Tête de palpage selon l'une des revendications 8 à 13, **caractérisée en ce que** le régulateur électronique (25) augmente la force de friction du frein à friction (19, 27) ou serre le frein à friction pendant les processus d'accélération de la tête de palpage.
